(19)

**Europäisches Patentamt**

**European Patent Office**

**Office européen des brevets**

(11) **EP 3 926 522 A1**

(12) **EUROPEAN PATENT APPLICATION**

(43) Date of publication:
**22.12.2021 Bulletin 2021/51**

(51) Int Cl.:
**G06K 9/00** *(2006.01)*          **G06K 9/62** *(2006.01)*

(21) Application number: **20181229.4**

(22) Date of filing: **19.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **CybELE Lawgical, Lda**
**2645-449 Alcabideche (PT)**

(72) Inventors:
• **BOUVIER, Robin**
  **38410 St-Martin-d'Uriage (FR)**
• **GIRMALA, Michal**
  **08001 Presov (SK)**

(74) Representative: **Müller Schupfner & Partner**
**Patent- und Rechtsanwaltspartnerschaft mbB**
**Bavariaring 11**
**80336 München (DE)**

(54) **METHOD FOR IDENTIFYING AND/OR SPECIFYING, IN PARTICULAR QUANTIFY-ING, A MATERIAL OR A MATERIAL COMPOSITION AND/OR A LAND STRUCTURE OF A MINE AND/OR OF SURROUNDINGS OF THE MINE, ANALYSIS DEVICE, DATABASE, USE OF SUCH A DATABASE, COMPUTER PROGRAM PRODUCT AND COMPUTER READABLE MEDIUM**

(57)    A method for identifying and/or specifying, in particular quantifying, a material or a material composition and/or a land structure of a mine and/or of surroundings of the mine, for example material or material composition including lead (II) sulphide and/or other mine sulphide tailings, iron bearing materials, heavy metals, mercury, cyanide, anglesite, cerrusite, mimetite and/or plumbojarosite, the material or material composition being included in a soil, a vegetation and/or a fluid of the mine and/or of the surroundings of the mine, comprising
- providing (100) a first image data set (11) of a landscape (4) including the mine and/or surroundings of the mine, the first image data set (11) being recorded by a first image recording device (21), for example recorded from a satellite or an airplane, and
- determining a first amount of a recorded intensity of the first image data set (21) within a first wavelength interval, depending on the material and/or material composition, in particular by using at least three different bands used for recording the first image data set.

Fig. 1

**Description**

The present invention concerns a method for identifying and/or specifying, in particular quantifying, a material or a material composition and/or a land structure of a mine and/or of surroundings of a mine, an analysis device, a database, an use of such a database, a computer program product and a computer readable medium.

Identifying materials or material compositions from multispectral images, being for example recorded by satellites or airplanes or other elevated devices are well known from the prior art. Examples can be found in US 6,366,681 B1, US 9,619,711 B2 and US 2015 0 071 528 A1. In general, it is well known to identify a material in a spectroscopic manner by analysing an intensity distribution of recorded light at a specific wavelength, the material absorbing at said specific wavelength.

The present invention concerns identifying properties of a mine by analysing image data sets, being recorded by a satellite or an airplane or another elevated device, such as a drone. Mining companies are facing growing problems related to pollution management. Due to their long-term toxicity, mine tailings must be kept isolated from the environment. An environmental compliance has consequently become a top priority concern for society and one of major business risk for mining owners. Domestic law imposes companies to be liable for any environmental damage and to support the cost of remediation. For that reason, the mining sector is devoting an important and growing part of its operational expenses to develop industrial practises and to achieve the highest environmental/ethical standards with a social license to operate (SLA).

Considering the prior art, it is an object of the present invention to simplify identifying and/or specifying material or material compositions and/or land structures of a mine and/or surroundings of the mine, such that a mine operator or, for example, anyone can easily identify the status of the mine, such as its pollution, and/or identify regions being interesting for a mine or mine tailing without performing cost intensive and expensive tests, for example based on soil samples, especially in such regions, which are not accessible in an simple manner.

The problem is solved by the method of claim 1, the analysis device of claim 9, the database of claim 12, the use of the database according to claim 13, the computer programme product according to claim 14 and the computer readable medium according to claim 15. Preferred embodiments are incorporated in the dependent claims, the description and the figures.

According to the present invention a method for identifying and/or specifying, in particular quantifying, a material or a material composition and/or a land structure of a mine and/or of surroundings of the mine, for example material or material composition including lead (II) sulphide and/or other mine sulphide tailings, iron bearing materials, heavy metals, mercury, cyanide, anglesite, cerrusite, mimetite and/or plumbojarosite, the material or material composition being included in a soil, a vegetation and/or a fluid of the mine and/or of the surroundings of the mine, is provided, comprising

- providing a first image data set of a landscape including the mine and/or surroundings of the mine, the first image data set being recorded by a first image recording device, for example recorded from a satellite and/or an airplane, and

- determining a first amount of a recorded intensity of the first image data set within a first wavelength interval, depending on the material and/or material composition, in particular by using at least three different spectral bands used by the first image recording device for recording the first image data set, and

- performing a first check, whether a first condition is fulfilled by the first amount of the recorded intensity, preferably in order to address a first absorption specification of the material and/or material composition and

- performing a second check, whether a second condition is fulfilled, in particular by using an information, preferably at least one information, of a further spectral band used for recording the first image data set and/or a second image data set, the further spectral band being different from the at least three spectral bands used for the first check, preferably in order to address a second absorption specification of the material and/or material composition, and

- identifying and/or specifying material or a material composition and/or a land structure of a mine and/or of surroundings of the mine of at least a section of the landscape including the mine and/or the surroundings of the mine based on the results of the first check and the second check by means of an analysis device and

- monitoring, in particular mapping, a result of the identified and/or specified material, the material composition and/or the land structure and/or

- generating an alert signal, based on the result of the first check and the second check.

Preferably, it is provided that an analysis is performed, comprising

- analysing the impact of the material composition and/or land structure anomalies in the environment surrounding the mine, especially regarding residential or natural areas and specific infrastructures, such as schools, hospitals etc for determing the interaction between materal compositions and/or land structures of the mine and the environment surrounding of the mine. Based on the the analysis of the interaction between material composition and/or land structure of the mine and the environment surrounding the mine, preferably the alert signal is generated.

Contrary to the state of the art, a first check and a second check are performed according to the present invention in order to increase the reliability of the identification and/or specification of the material, material composition and/or land structure. In particular, the present invention considers the fact that - although a certain characteristic or specific absorption might cause a decrease of the recorded intensity and thus the existence of the material or a material composition in a recorded section of the landscape might be implied - such a modification of the recorded intensity could also be a result of another material and/or material composition. By checking the second condition, for example by considering at least one additional contribution in a wavelength interval being not included in the spectral bands, being used for identifying the amount of the first intensity within the first wavelength interval, i. e. in a wavelength interval which addresses the second absorption specification, it is in an advantageously possible to check, whether said reduction of the recorded intensity within the first wavelength interval is caused indeed by the specific material or material composition or is caused coincidentally by a different material. By performing the second check, therefore, the reliability for identifying the material or material composition is increased. As a consequence, the present invention can monitor the result of the method in a more reliable way compared to the methods being known from the prior art. In particular, it surprisingly turned out that is possible in the specific technical field of recording first image data sets by a satellite, being limited in spectral bands for recording the image, to rely on a second check for increasing the reliability, in particular by considering second absorption specification of the certain material. In particular, it is provided for identifying that the existence of the material in a region, being assigned to the corresponding pixel, is confirmed, when the first check and the second check are positive.

Consequently, it is possible to simplify the method for identifying and/or specifying the material and/or material composition and/or land structure of a mine, since in this way a single recorded first image data sets can be used to identify the material and/or material composition. As a result, for example, soil samples do not have to be used for identifying and specifying the material composition of the soil. As a result, it is easy to identify and monitor the current status or a previous status of a mine with respect to its pollution and/or mine tailing.

By using the method it is also possible to identify and monitor mine tailings in a reliable manner, in particular for checking whether mining regulations are satisfied. Such mine tailings might involve toxic leftovers and/or residues of chemicals used for mineral extraction. For example, cyanide used in gold mining remains in the tailing at the end of extraction. Rocks may also naturally contain dangerous chemicals such as arsenic and mercury. In addition or alternatively, it is possible to monitor for example acid mine drainage (AMD), AMD referring to the outflow of acidic water from metal and coal mine. This, combined with a reduced pH level, has a detrimental impact on the environment. For example, it is possible to detect potential leaks of chemical components or other issues with waste storage. Further, it is possible to observe an impact of mine infrastructure of a forest, e. g. loss of vegetation cover due to mine extension, or on water quality, e. g. increase of pH in water or even chlorophyll. In particular, it is provided to include the use of InSAR interferometric SAR satellite techniques to map millimetre-precise changes in ground height over time and to monitor the stability of tailing storage facilities (TSF). This allows assessing the impact of natural hazards and allows rapid and accurate targeting of high risk - areas and structures to identify those that require subsequent investigation through ground based methods.

The first image data set can be recorded by a first imaging device being mounted or arranged on a satellite, airplane and/or a drone. Preferably the first check and the second check are performed by using the same first image data set, being in particular provided as raw data, of which for example spectral components of different bands can be extracted and considered to determine a certain condition being relevant for the first check and/or the second check. As a result, it is possible to avoid using a reference data set to identify the material and/or to specify the material composition. Concerning the land structure, it is also possible to identify, determine and/or specify for example landslides, such as a dam, which can, for example, be identified by the method, preferably in an automatic way.

Concerning the surroundings of the mine, it is for example possible to identify a material composition within a river, which passes through a mine region, which shows an increased amount of a certain material, wherein the pollution of the river is a result from the existence of a material inside the mine. Therefore, it is helpful to consider, for example, the material and/or material composition of surroundings of the mine. It is also conceivable, that the vegetation of the surrounding the mine can indicate a certain pollution and/or tailing, such that those information can also contribute to give information about the current status of the mine. The impact of the mine on different types of infrastructures (hospitals, schools, natural protected area, residential areas...) surrounding the mine is also assessed to identify potential risk.

Preferably, the analysis device is configured such that the analysis device can extract several spectral bands from a recorded first image data set, preferably pixel by pixel. Thus, it is possible to use the different spectral bands to perform a first and a second check or identifying and/or specifying a material and/or material composition and/or land structure for the mine and/or the surroundings of the mine.

Furthermore, monitoring the results might be realized by visualizing the first image data set on a display, in particular, using a colour code or another highlighting method associated to a legend for specifying such sections of the landscape having a certain amount of the material and/or the material composition. For example, the intensity of the colour specifies its amount. Preferably, the monitoring is realized or performed on a web interface or internet interface being available to the operator, on demand. For example, it is conceivable that the operator chooses a certain section on a map, i. e. geographical section being shown in the map, and the analysis device provides the results by performing the method, in particular, instantaneously or as a reaction of a specific input of the operator.

Furthermore, it is provided that an alert signal is generated, for example, on the monitor screen or in the mapping of the results or alternatively by providing an information to the operator. Such an information can be provided via e-mail, a SMS or a similar way of communication. For example, the operator can ask for performing the method from time to time, preferably by a defined time interval, and in case of a certain amendment, the operator is informed by a corresponding alert signal without the need of taking a closer look to the certain data on a regular basis, for example on the web-interface.

Furthermore, it is also conceivable that the results are illustrated in a "google maps" - like illustration, which uses a colour code in combination with a landscape visualisation, wherein the colour code highlights the material and/or material composition, in particular the amount of the identified and specified material and/or material composition.

Preferably, it is provided that the first check, the second check and preferably additional checks are performed for a plurality of pixels of the first image data set and the alert signal is generated based on the result of the first and the second check, when a threshold is exceeded for a group of pixels of the first image data set, in particular a predefined group or number of pixels.

Preferably, the term analysis device can also refer to a (personal) computer, a virtual machine running on host hardware, a microcontroller, or an integrated circuit. As an alternative, the analysis device can be a real or a virtual group of computers (the technical term for a real group of computers is "cluster", the technical term for a virtual group of computers is "cloud"). Preferably, the analysis device comprises a calculation unit and a memory unit. A calculation unit can comprise hardware elements and software elements, for example a microprocessor or a field programmable gate array. A memory unit or storage device can be embodied as non-permanent main memory (e.g. random access memory) or as permanent mass storage (e.g. hard disk, USB stick, SD card, solid state disk). Furthermore, it is also conceivable that the analysing device includes at least one server and uses at least a platform or network of several server, which support each other for performing the method.

Preferably, additional checks are performed, whether a series of additional conditions are fulfilled, by using

- an information of a further band used for recording the first image data set and/or a second image data set,
- other information of the first image data set and/or
- an information external to the first image data set or being not included in the first image date set. As a result, it is possible to further increase the reliability of the identification and specification of the identified or specified material and/or material composition

External information can for instance involve the intersection of database related to in situ samplings of chemical component at the level sites. In-situ database can also include information on forestry or water quality information. Dabatabase of drone imagery and analysis can also be used to performed additional checks.

Furthermore, it is preferably provided that a number of conditions is selected or, for example, can be selected at the web-interface such that the reliability of results on the one hand and the sensitivity of the analysis on the other hand are balanced. In this way, it is taken into account that by increasing the number of conditions, which needs to be checked, the method becomes less sensitive to identify certain materials. As a result, it is preferably provided to perform two to five checks, including the first check and the second check.

Preferably, the first image data set and/or the second image data set is a multi-spectral, a hyperspectral, a radar and/or a lidar imagery. It turned out that it is possible to use several different imagery types to identify certain material and/or material compositions. It is also even conceivable that different kinds of images are used to identify a material or material compositions. In this case, the first image data set is recorded by a first image recording device and a second image data set is recorded by a second imaging recording device, the first image recording device and the second image recording device being different from each other and both are used to identify a spectral component or contribution of the reflected light, being assigned to the second absorption specification, to identify the material composition in a certain pixel. It is even conceivable that the first check uses the first image data set and the second check uses the second image data set. For example, first image data sets and/or second image data sets of Sentinel 2, Landsat, Aster, Pleiadtes, Spot, Worldview, GeoEye 1, QuickBird, Ikonos, SkySat, PlanetScope, RapidEye, SuperView-1, KOMPSAT, Gaoen-2, Triplesat, SkySat-1, SkySat-2, Sentinel 1, ENVISAT-ASAR, ERS1, 2, Radarsat, TerraSAR-X, ICESat-2, Earth-CARE, Calipyo/CENA, Jilin-1 and/or EO-1 Hyperion are used. Preferably, high resolution (VHR) remotely sensed multispectral earth imagery is used for the method.

Especially, the first check and/or the second check is selected in dependency of the type of the first image recording device. For example, the first check and/or the second check differ from each other for different types of the first image recording device and/or is adapted to the type of the first image recording device. It turned out that the first check and second check have to be adapted to the specific first imaging recording device, for example to the certain satellite type, to optimize the reliability of the checks. As a consequence, the first check and/or second check performed for the satellite system Sentinel 2 differs from the first check of Landsat 8.

Furthermore, it is provided that the identified and/or specified material and/or material composition and/or the land structure of the mine and/or the surroundings of the mine, i. e. preferably the monitored results, are used to train a machine learning algorithm. For example, it is conceivable that the analysed first image data set is compared to collected and analysed soil samples of the same region. As a result, it is possible to train an artificial neuronal network for identifying automatically certain material or material composition. As a result, it is possible to automatize the identification of certain materials and/or material compositions, for example. Furthermore, it is possible in an easy way to use soil samples for training the machine learning algorithm, the used soil sample being accessible in an easy manner. At the same time, the method can identify material and/or material composition and/or land structure in such regions being not easy to access while the artificial neuronal network was trained with soil samples easily obtainable. As a result, the method simplifies identifying and/or analysing material and/or material compositions.

Furthermore, it is preferably provided that the results for the identified and/or specified materiel or the material composition and/or the land structure are updated within a time interval being less than one week, preferably less than three days and/or wherein the results for the identified or specified material are stored together with a time stamp. As a result, it is preferably provided to monitor also the time development of a certain region or recorded landscape. Furthermore, the update on a time base being shorter than at least one week allows a near real time analysis of the recorded first image data set. As a result, it is possible to react on modifications as soon as possible. Furthermore, the analysis or the monitoring of the results being spaced in time only a few days allows extrapolation of developments or modifications such that it is possible to predict, for example, a certain pollution and/or danger in near future. As a result, it is possible to perform countermeasures as soon as possible by considering monitored analysis on a near real-time level. Furthermore, the stored results and/or image data sets allow relying on the data and results for documentation and/or analysis in the future.

Moreover, it is provided that the first image data set and/or the second image data set are used without using a training data set or a reference data set for each implementation of the process to provide the result being monitored. In other words, only the spectral band intensity contributions of the first image data set are considered to perform the first check and the second check. The calculation of values concerning several different reference pictures or image data sets are not taken into account such that only the first image data set is needed to provide a result of the analysis. In particular, instead of using training data sets a decision tree with a rule-based classifier is used.

Furthermore, it is provided that the method further comprises:

- identifying and/or specifying the material, the material composition and/or the land structure of the mine and/or the surroundings of the mine based on the first image data set being recorded at a first time interval and identifying and/or specifying the material or the material composition and/or the land structure of the mine and or of surroundings of the mine based on a second image data set, being recorded at a second time interval, and

- providing, in particular, monitoring, a time development of a result for identified and/or specified material and/or material compositions of the land structure of the first image data set recorded at the first time interval as a second image data set at the second time interval. As a result, it is possible in an advantageous manner to monitor the time development of the material and/or material composition and/or the land structure for identifying pollutions and/or tailing effects.

Another aspect of the present invention is an analysis device for performing a method according to the present invention, in particular, connected to a web-based interface devices for monitoring the results of the identified and specified material or material compositions. All benefits and specifications described in context of the subject matters of the method applies analogously to the analysis device of the present invention and vice versa.

Preferably, it is provided that the analysis device comprises a database including a first image data set and a second image data set, preferably a first image data set recorded at the first time interval and the second image data set recorded at the second time interval. As a result, a huge amount of first image data and second image data sets are provided to an operator or anyone such that he can access all information, which he needs concerning the past and the development of the recorded landscape including the mine or the surroundings of the mine. Furthermore, it is preferably provided that several first image data sets and/or second image data sets are provided, wherein the different sets are provided by different satellite types and/or recording devices. As a result, it is possible to collect different results from different image recording devices to further specify and complete information about the recorded landscape. For example, the spatial resolution can be improved by taking into account more information being provided by further image recording devices.

Furthermore, it is provided that the analyse devices comprises at least one server, in particular including a storage medium for storing the first image data set, the second image data set and/or the monitored results.

Another subject matter of the present invention is the database providing a first image data set and/or a second image data set for a method according to the present invention. All benefits and specifics, being discussed in context of the method, can be analogously applied to the database and vice versa.

Preferably, the database is configured to storage and provide direct access to an archive of enhanced images for each mining site (for example up to 4 or 5 years). In particular the analysis device and/or the database is configured to provide

- a capacity to download enhanced images to conduct multi-temporal analysis of a mining site and/or
- a capacity to monitor different mining site at the same time form a single location.

Another subject matter of the present invention is the use of the database according to the present invention for identifying and/or specifying a material and/or material composition or the land structure of the mine and/or of surroundings of the mine. All benefits and specifications, being discussed in context of the method can be analogously applied for the use of the database according to the present invention and vice versa.

A further subject matter of the present invention is a computer programme product comprising programme code instructions for carrying out the steps of the method according to the present invention, wherein the programme code instructions are loaded into a memory of a programmable device and/or for generating an alert after carrying out the steps of the present invention. All benefits and specifications are being discussed in context of the method analogously applies for computer programme product according to the present invention and vice versa.

Another subject matter of the present invention is a computer-readable medium on which program code instructions are stored that can be read and executed by a computer unit in order to perform steps of the method according to the present invention, when the program code instructions are executed by the computer unit, in particular the analysis device. All benefits and specifications being discussed in context of the method can be analogously applied to computer readable medium and vice versa.

The computer-readable medium may be a data carrier such as the cloud, a hard disc, CD-ROM, SD-card or other digital medium. The computer unit and the programmable device may be any form of digital calculating device, e.g. a PC, smart phone, tablet computer, cloud, workstation or handheld device. Preferably, the computer unit and/or the programmable device are incorporated into the analysis device.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:

**Fig. 1** schematically shows recording a first image data set recorded by a first image device

**Fig. 2** schematically shows a method for identifying and/or specifying, in particular quantifying, a material or a material composition and/or a land structure of a mine and/or of surroundings of the mine according to a first embodiment

**Fig.3** schematically shows another method for identifying and/or specifying, in particular quantifying, a material or a material composition and/or a land structure of a mine and/or of surroundings of the mine according to a second embodiment

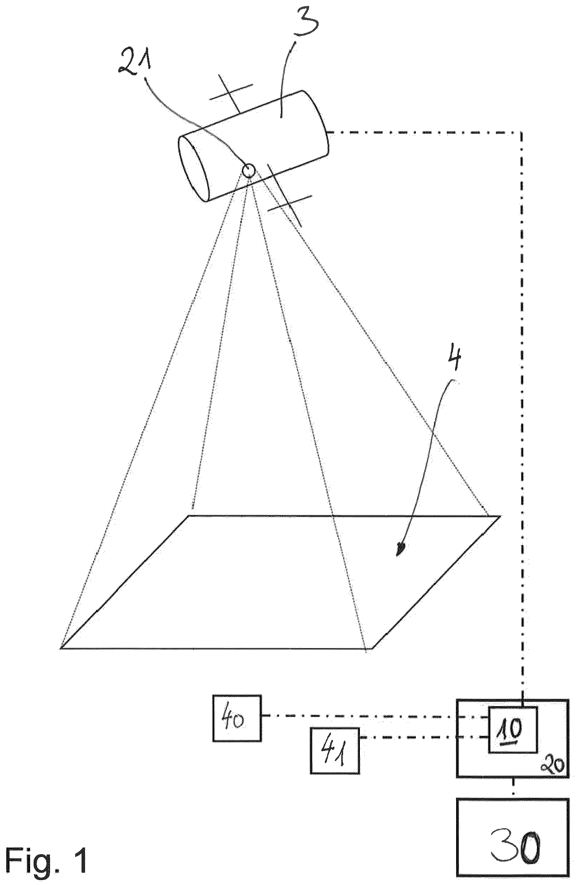

In **figure 1** a satellite 3 is illustrated, which records a first image data set 11 by using a first image recording device 21 being included in the satellite 3. Preferably, the recorded first image data set 11 is a multi-spectral imagery, which records pixel-wise intensities of different spectral bands, the first image recording device 21, being preferably sensitive to specific spectral bands. In other words: The recorded first image data set 11 device includes a plurality of pixel, each pixel having components of different spectral bands, being used during recording the first data image set 11. The spectral bands, being available, depends on the type of satellite or the type of first data image recording device 21, used for recording the first data image data set 11. It is also conceivable that the first image data set 11 is recorded by an airplane and/or a drone. In general, these first imagine data sets 11, which are provided as raw data, are transmitted either to a database 10 or to an analysis device 20. For example, it is possible to reconstruct a picture of the recorded landscape, which illustrates the land structure or land formation within the recorded landscape by illustrating the recorded intensities pixel-wise, i. e. pixel by pixel, of different spectral bands being recorded by the first image recording device 21.

The present invention concerns identifying and specifying, in particular quantifying, a material or material composition and or a land structure of a mine and of surroundings of the mine. In other words: the present invention addresses the technical problem of identifying specific material or material composition or land structures, which are typical for mines and their surrounding in order to conclude from its existence or its amount to the status of the mine, in particular its pollution.

Preferably, the present invention is intended to identify and quantify material or material composition including lead (II) sulphite and/or other mine tailings sulphates, iron bearing materials, heavy metals, mercury, cyanide, anglesite, cerrosite, mimietite and/or plumbojarosite. Such material composition might be included in a soil, a vegetation and a fluid of the mine and/or the surroundings of the mine and cannot be identified, for example, directly by direct visualizing of the multispectral imagery of the first image data set, which is realized, for instance, by monitoring the overall recorded intensities pixel by pixel, for example on a screen or a display.

Preferably, the database 10 is incorporated in the analysis device 20 and/or is configured as database 10 to which the analysis device 20 has access to.

Furthermore, it is conceivable to rely on first image data sets 11 of an external database 40, providing also imaginary of satellites 3, in particular of different satellites, and/or on information of a non-satellited database 41. Preferably, the information of the non-satellite database 41 and/or results of the first image data set 11 of the external database 40 are considered during analysing 111 the first image data set 11, preferably in addition to the first image data set 11 being provided by the satellite 3. The analysis device 20 preferably is configured to aggregate, to fuses, to process and/or to preform a quality check of the first image data set 11 of the satellite 3 and/or the external database 40 and/or the information of the non-satellite database 41. Finally the results of analysing 111 the data sets and information is provided to a operator by monitoring 103, in particular via a user interface, which allows chosing certain analytic features. In other words: The interface, preferably in form of a web interface, allows choosing a desired analysis and the information and data sets are analysed correspondingly for the operatior by using the interface.

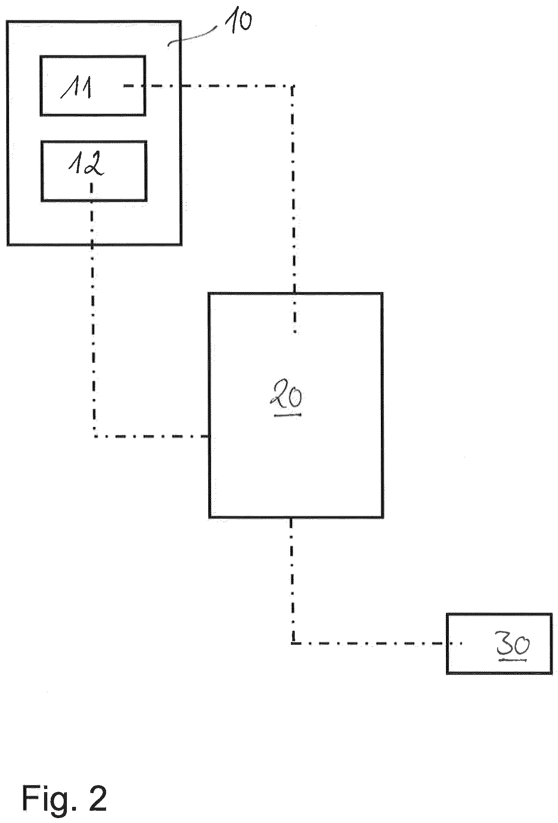

In **figure 2** a method for identifying and specifying a material or a material composition and/or a land structure of the mine and/or the surroundings of the mine according to a first embodiment of the present invention shown. According to a first embodiment the first image data set 11 is provided to an analysis device 20, which is configured to extract the several components of the different spectral bands, used for recording the first image data set from the raw data of the first image data set 11 and, furthermore is configured to determine a first amount of a recorded intensity of the fist image data set 11 within a first wavelength interval. In turned out that by using for example three contributions, each being assigned to a specific band used for recording the first image data set, it is possible in an advantageous way to identify an intensity drop or intensity reduction for a pixel within a set wavelength interval.

Furthermore, it turned out that there is a chance that performing the first check 101 is positive for identifying a specific material, although the specific material is not located in the recorded region of the landscape. Such a misinterpretation is result of the fact that other vegetation might also have an absorption in the same wavelength interval or might cause a similar absorption within the first wavelength interval such that a misinterpretation of the data occurs, although the first check 102 is positive.

For improving the reliability of the analysis, it is preferably provided that besides the first check 101 a second check 102 is performed, in particular by relying on a spectral band being also used for recording the first image data set, but being not for specifying the first condition. In other words: the first condition and the second condition, being tested in the first check 101 and the second check 102, uses information of two different spectral regions such that it can be avoided that a misinterpretation occurs because another material has the same result for the first condition.

Furthermore, it is even conceivable that further additional checks including further additional conditions are performed to further increase reliability. However, it also turned out that by increasing the number of conditions the reliability increases while the sensitivity of the method for identifying and quantifying the amount of materials in the recorded landscape decreases. As a consequence, preferably two to five conditions are checked for identifying and/or quantifying materials and material compositions.

Moreover, in addition to the material also a landscape or a land structure is taken into consideration for identifying specific materials or specific material compositions. It also thinkable that the second condition might consider such land structure and formations for reducing the probability of certain materials to be identified.

Furthermore, it also conceivable to conclude, whether the mine includes a certain material or material composition by analysing a region surrounding the mine such as a river, because the river includes a material composition being typical for the existence of another material being inside the mine.

For example, it is possible in advantageous manner to identify an increase of the absorption at a wavelength of 0.55 $\mu$m to identify the existence of lead (II) sulphite in the recorded pixel. Preferably, spectral bands of the images taken from the first image recording device, covering the wagelenght inverval of blue, green and red light are used to detect a intensity drops at 0.55 $\mu$m for the first condition in order to address a first absorption specification of the observed or detected material, while spectral bands of the first image recording device, preferably in a wavelength interval between 0.4 and 2.5 $\mu$m are used for a second check 1020 testing a second condition, for example to address a second absorption specification of the material being identified or specified. As consequence, it is possible to identify the existence of lead (II) sulphite in the region of the landscape or map, the region being assigned to the pixel being analysed.

Furthermore, it is possible to monitor a plurality of pixels, in order to construct a landscape which shows and identifies the distribution of a certain material, in particular of lead (II) sulphite, which is typical for mines and/or their pollution. In particular, it is provided that the analysis device 20 is configured such that a first check 101 is performed by the analysing device 20, wherein performing a first check 101 is intended to check whether a first conduction is fulfilled by the first amount of the recorded intensity. For example, the relation

$$PbS_{FD1} = (f_{blue} + f_{red})/2 - f_{green}$$

is used as a first check 101, which identifies, whether the existence of a specific material, namely or in particular lead (II) sulphite, exists in the section of the recorded landscape, which is assigned to the corresponding pixel. Thereby, $f_{blue}$, $f_{red}$ and $f_{green}$ corresponds to intensities of three different spectral bands, namely a blue spectral band, a red spectral band and a green spectral bands, and $PbS_{FD1}$ represents a percentage drop (value * 100) of the recorded intensity in the wavelength interval of the material specific absorption. In case $PbS_{FD1}$ is smaller than a threshold value the first condition is fulfilled.

In the following $f_{11}$, $f_{12}$, $f_5$, $f_6$, $f_7$, $f_1$ are contribution from spectral bands being different from the blue, red and green spectral band.

For first image data sets recorded by Sentinel 2, as second condition ($f_{blue} > f_{green}$) and ($f_{green} < f_{red}$) and ($f_{red} > f_{11}$) and $PbS_{FD1} > 0$ and ($f_{red} > f_{12}$) needs to be fulfilled in order to reliable identify lead (II) sulphite.

For a first image data sets recorded by Landsat 8, as second condition ($f_{blue} > f_{green}$) and ($f_{green} < f_{red}$) and ($f_{red} > f_6$) and $PbS_{FD1} > 0$ and ($f_{red} > f_7$) needs to be fulfilled in order to reliable identify lead (II) sulphite.

For a first image data sets recorded by Landsat 7, as second condition ($f_1 > f_{blue}$) and ($f_{blue} < f_{green}$) and ($f_{green} > f_5$) and $PbS_{FD1} > 0$ and ($f_{green} > f_7$) and as first condition

$$PbS_{FD1} = (f_{blue} + f_{red})/2 - f_{green}$$

need to be fulfilled in order to reliable identify lead (II) sulphite.

For a first image data sets recorded by Landsat 5, as second condition ($f_1 > f_{blue}$) and ($f_{blue} < f_{green}$) and ($f_{green} > f_5$) and $PbS_{FD1} > 0$ and ($f_{green} > f_7$) and as first condition

$$PbS_{FD1} = (f_{blue} + f_{red})/2 - f_{green}$$

need to be fulfilled in order to reliable identify lead (II) sulphite.

Especially it is provided that the method includes

- obtaining a multi-spectral image data set as first image data set for a geographical area including the spectral bands that response to a lead (II) sulphide absorption, at least at 0.55 μm,
- applying the restriction with additional constraints based on lead (II) sulphide spectral signature and the position of multispectral bands. Based on this the following conditions are derived and tested:
- generating a raster layer of lead (II) sulphide absorption feature removing background data and preferably represented by an enhanced image resulting from the following process:
- obtaining a digital image of the blue spectral band for the geographic area monitored which includes a set of pixels, each pixel representing reflectance values of the blue spectral band,
- obtaining a digital image of the green spectral band for the geographic area monitored which includes a set of pixels, each pixel representing reflectance values of the green spectral band,
- obtaining a digital image of the red spectral band for the geographic area monitored which includes a set of pixels, each pixel representing reflectance values of the red spectral band, and
- determining an amount of lead (II) sulphide concentration in a delimited geographic area represented by lead (II) sulphide absorption data set.

In particular, it is possible to identify whether a certain section or region includes lead (II) sulphite without performing an analysis of a soil sample. Instead the imaginary being recorded by the first imaging device is used to identify the existence or amount of the lead (II) sulphite in the recorded landscape. Furthermore, it also conceivable that the analysis device performs the first check 101.

Furthermore, it is preferred that the results of identifying and/or specifying the material or material composition and/or a land structure of the mine and/or the surroundings of the mine, in particular of at least a section of the landscape including the mine or the surroundings of the mine, is monitored by a monitoring device such as a display or screen, for example by a colour code map, which illustrates the existence and amount by colouring such pixels being assigned to the existence or a certain amount of the material being identified, in particular lead (II) sulphite.

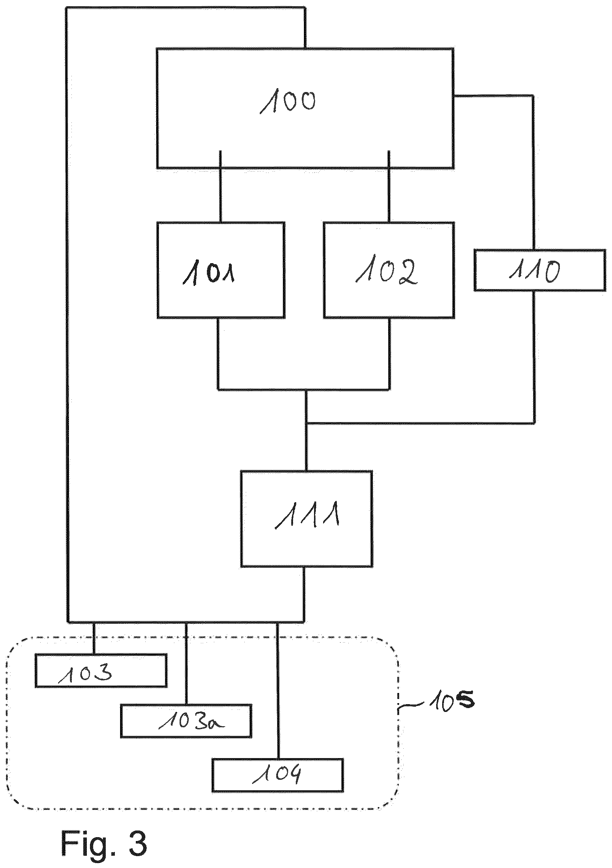

In **figure 3** another method for identifying and/or specifying, in particular quantifying, a material or a material composition and/or a land structure of a mine and/or surroundings of a mine according to a second embodiment is schematically shown. In particular, figure 3 illustrates a flow diagram that illustrates the method for identifying and specifying the material or material composition and/or land structure. Preferably, the first image data set 11 is provided, for example by a database 10. For example, the first image data set 11 is an imagenery of Sentinel 2. Especially, providing 100 includes collecting data and informatation from the database 10 and other sources, such as non-satellite databases 41 and/or different satellite databases 40. Preferably, the database 10 includes first image data set 11, in particular being recorded by several first image recording devices 21 and/or a second image recording device, wherein the first image recording device 21 and the second image data device differ from each other. By using a database 10, it is possible to rely on a huge amount of data, which can be used to give a more detailed and more specific impression of the recorded landscape, in particular, with respect to the spatial resolution and time resolution of the identified material, material composition and/or land structure. Furthermore it is conceicable that in addition further information concerning for example an infrastructure (schools, hospitals) or protected areas are colleceted while providing the first image data set 11.

Preferably, a EO precessing, for example by using POREWIT amd/or CERES products, is performed for visualizing the raw data of the first image dat set.

As shown in figure 3, the results of the first check 101 and the second check 102 contribute to the results of identifying or specifying the material or material composition which are mapped such that an operator can identify the different regions, for example in a visualized image which uses a certain colour code to highlight specific regions. In particular, only those regions, which fulfil the first check 101 and second check 102, are highlighted, in particular colour coded.

Preferably, the method comprises analyising 111 the results of EO processing 110 and/or the results of the first check 101 and the second check 102 and/or further information being provided by the non-satellite data base 41 and/or the external satellite database 40 for identifying geographical specifities, values, statistics, gradings and multitemporal comparison. It is also thinkable that by analysing 111 a forecasting and/or supporting a machine learning mechanism is possible.

Preferably, the results of analysing 111 and/or EO processing 110, i. e. for example, values, forecast, ML identification and/or enhanced images, are provided by a platform interface 105.

Furthermore, it is preferably provided that an alert is generated if a certain threshold is exceeded. For example, such a threshold concerns a size or a number of pixel, being correlated to a certain material in a recorded first image data set. Alternatively, the threshold is exceeded when a certain number of pixel exceeds a threshold value for the first intensity or the amount for the intensity or the amount of the intensity within the first wavelength interval. It is also conceivable that the alert is generated during the monitoring 103 and/or an operator is informed about the alert via a separate information data set such as an e-mail, an SMS or a telephone call. Besides generating 104 an alert and/or monitoring 103 the results, storing 103a the first image data set 11 and/or the results of analysing and/or EO processing 110 is possible.

Furthermore, it is preferably provided that the monitoring 103 is provided in a web interface, for example, an internet interface, which informs an operator on demand about the certain material and material composition of a landscape or map being selected by the operator, preferably by using the web interface. As a consequence, the operator can easily use the reliable visualized result being based on the first check 101 and second check 102 for identifying the material and/or material composition, in particular of regions of a landscape, which are not easy to access. Furthermore, it is also provided preferably that besides the first imagine data set, being recorded at a first time interval, a second image data set, recorded at a second time interval is analysed by the method for monitoring 103 a time development of the material and/or material composition and/or land structure. Thus, it is possible for an operator, in particular, at the web-interface to identify changes of the materials and/or material composition, which indicates for examples a mining and/or pollution of a certain region of the mine. In particular the method includes generating 104 an alert, when the first check 101 and second check 102 are positive, at least for a certain number of pixel.

Reference numbers:

| | |
|---|---|
| 3 | satellite |
| 4 | landscape |
| 10 | database |
| 11 | first data set |
| 12 | second data set |
| 20 | analysis device |
| 21 | first image recording device |
| 30 | monitoring device |
| 40 | external satellite database |
| 41 | non-satellite database |
| 100 | providing |
| 101 | first check |
| 102 | second check |
| 103 | monitoring |
| 103a | storing |
| 104 | generating |
| 105 | platform interface |
| 110 | EO processing |
| 111 | Analysing |

**Claims**

1. A method for identifying and/or specifying, in particular quantifying, a material or a material composition and/or a land structure of a mine and/or of surroundings of the mine, for example material and/or material composition including lead (II) sulphide and/or other mine sulphide tailings, iron bearing materials, heavy metals, mercury, cyanide, anglesite, cerrusite, mimetite and/or plumbojarosite, the material or material composition being included in a soil, a vegetation and/or a fluid of the mine and/or of the surroundings of the mine, comprising

- providing (100) a first image data set (11) of a landscape (4) including the mine and/or surroundings of the mine, the first image data set (11) being recorded by a first image recording device (21), for example recorded from a satellite or an airplane, and
- determining a first amount of a recorded intensity of the first image data set (11) within a first wavelength interval, depending on the material and/or material composition, in particular by using at least three different spectral bands used for recording the first image data set, and
- performing a first check (101), whether a first condition (101) is fulfilled by the first amount of the recorded intensity, and
- performing a second check (102), whether a second condition (102) is fulfilled, in particular by using an information of a further spectral band used for recording the first image data set (11) and/or a second image data set (12), the further spectral band being different from the at least three spectral bands used for the first check, and
- identifying and/or specifying material or a material composition and/or a land structure of a mine and/or of surroundings of the mine of at least a section of the landscape (4) including the mine and/or the surroundings of the mine based on the results of the first check (101) and the second check (102) by means of an analysis device (20) and
- monitoring (103), in particular mapping, a result of the identified and/or specified material, the material composition and/or the land structure and/or
- generating (104) an alert signal based on the result of the first check (101) and the second check (102).

2. The method according to claim 1, wherein additional checks are performed, whether a series of additional conditions are fulfilled by using

- an information of a further band used for recording the first image data set (11) and/or a second image data set (12),
- other information of the first image data set and/or a second image data set (12) and/or
- an information being not included in the first image data set (11).

3. The method according to claim 1 or 2, wherein the first image data set (11) and/or a second image data set (12) is a multispectral, hyperspectral, radar and/or a lidar imagery.

4. The method according to one of the preceding claims, wherein the first check (101) and/or the second check (102) is selected in dependency of the type of the first image recording device (21).

5. The method according to one of the preceding claims, wherein the identified and/or specified material or material composition and/or the land structure of the mine and/or of the surroundings of the mine, in particular the monitored results, are used to train a machine learning algorithm.

6. The method according to one of the preceding claims, wherein the result for the identified and/or specified material, the material composition and/or the land structure are updated within a time interval being less than one week, preferably less than three days, and/or wherein the results for the identified and/or specified material are stored together with a time stamp.

7. The method according to one of the preceding claims, wherein only the first image data set (11) and/or a second image data set (12) is used, in particular without using a training data set or a reference data set for each implementation, to provide the results being monitored.

8. The method according to one of the preceding claims, wherein

- identifying and/or specifying the material, the material composition and/or the land structure of a mine and/or of surroundings of the mine based on the first image data set (11) being recorded at a first time interval and identifying and/or specifying the material or the material composition and/or the land structure of a mine and/or of surroundings of the mine based on a second image data set (12) being recorded at a second time interval, and
- providing, in particular monitoring (103), a time development of the results for identified and/or specified material or material compositions and/or the land structure of the first image data set (11) recorded at the first time interval and the second image data set (12) at the second time interval.

9. An analysis device (20) for performing a method according to one of the preceding claims, in particular connected to a web-based interface device for monitoring (103) the result of the identified and/or specified material or material composition and/or land structure.

10. The analysis device (20) according to claim 9, further comprising a database (10) including a first image data set (11) and a second image data set (12), preferably a first image data set (11) recorded at a first time interval and/or a second image data set (12) recorded at a second time interval.

11. The analysis device (20) according to claim 9 or 10, wherein the analysis device (20) comprises at least one server, in particular including a storage medium for storing the first image data set (11), the second image data set (12) and/or the monitored results.

12. A database (10) providing a first image data set (11) and/or a second image data set (12) for a method according to any one of the claims 1 to 8.

13. Use of the database (10) according to claim 12 for identifying and/or specifying a material, a material composition or the land structure of a mine and/or of surroundings of the mine.

14. A computer program product comprising program code instructions for carrying out the steps of the method according to any of claims 1 to 8 when the program code instructions are loaded into a memory of a programmable device, in particular an analysis device (20), and/or for generating an alert after carrying out the steps of the method according to any of the claims 1 to 8.

15. A computer-readable medium on which program code instructions are stored that can be read and executed by a computer unit in order to perform steps of the method according to any of the claims 1 to 8 when the program code instructions are executed by the computer unit.

Fig. 1

Fig. 2

Fig. 3

Europäisches
Patentamt

European
Patent Office

Office européen
des brevets

# EUROPEAN SEARCH REPORT

Application Number

EP 20 18 1229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LOZANO-COTRINA EDGARDO ET AL: "Detection of Minerals Through the Processing of Satellite Images", 2018 IEEE XXV INTERNATIONAL CONFERENCE ON ELECTRONICS, ELECTRICAL ENGINEERING AND COMPUTING (INTERCON), IEEE, 8 August 2018 (2018-08-08), pages 1-4, XP033439646, DOI: 10.1109/INTERCON.2018.8526383 [retrieved on 2018-11-06] * the whole document * | 1-15 | INV. G06K9/00 G06K9/62 |
| X | WAN YUTING ET AL: "Tailings Reservoir Disaster and Environmental Monitoring Using the UAV-ground Hyperspectral Joint Observation and Processing: A Case of Study in Xinjiang, the Belt and Road", IGARSS 2019 - 2019 IEEE INTERNATIONAL GEOSCIENCE AND REMOTE SENSING SYMPOSIUM, IEEE, 28 July 2019 (2019-07-28), pages 9713-9716, XP033655860, DOI: 10.1109/IGARSS.2019.8898447 [retrieved on 2019-11-13] * the whole document * | 1-15 | TECHNICAL FIELDS SEARCHED (IPC) G06K |
| X | CHOWDHARY ABHIJEET ET AL: "Detection of coal stockpiles using geospatial satellite images", PROCEEDINGS OF SPIE; [PROCEEDINGS OF SPIE ISSN 0277-786X], SPIE, 1000 20TH ST. BELLINGHAM WA 98225-6705 USA, vol. 11156, 8 October 2019 (2019-10-08), pages 111560R-111560R, XP060124699, ISSN: 0277-786X, DOI: 10.1117/12.2532523 ISBN: 978-1-5106-3927-0 * abstract * * sections 3 and 4 * | 1-15 | |

-/--

The present search report has been drawn up for all claims

| Place of search | Date of completion of the search | Examiner |
|---|---|---|
| The Hague | 27 November 2020 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 356 646 B1 (SPENCER CLYDE H [US]) 12 March 2002 (2002-03-12) * column 7, line 40 - column 12, line 28 * * column 14, line 60 - column 15, line 63 * | 1-15 | |
| A | JENICE AROMA R ET AL: "A review on availability of remote sensing data", 2015 IEEE TECHNOLOGICAL INNOVATION IN ICT FOR AGRICULTURE AND RURAL DEVELOPMENT (TIAR), IEEE, 10 July 2015 (2015-07-10), pages 150-155, XP032833805, DOI: 10.1109/TIAR.2015.7358548 [retrieved on 2015-12-16] * the whole document * | 1-15 | |

TECHNICAL FIELDS
SEARCHED       (IPC)

The present search report has been drawn up for all claims

| Place of search | Date of completion of the search | Examiner |
|---|---|---|
| The Hague | 27 November 2020 | Chehade, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 18 1229

This annex lists the patent family members relating to the patent documents cited in  the above-mentioned European search report.
The members are as contained in the European Patent Office EDP file on
The European Patent Office is in no way liable for these particulars which are merely given for the purpose of information.

27-11-2020

| Patent document cited in search report | | Publication date | Patent family member(s) | Publication date |
|---|---|---|---|---|
| US 6356646 | B1 | 12-03-2002 | NONE | |

For more details about this annex : see Official Journal of the European Patent Office, No. 12/82

EPO FORM P0459

**EP 3 926 522 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6366681 B1
- US 9619711 B2
- US 20150071528 A1